# EUROPEAN PATENT APPLICATION

(11) **EP 4 446 735 A1**
(43) Date of publication of application: **16.10.2024**
(21) Application number: 24166749.2
(22) Date of filing: 27.03.2024
(51) Int. Cl.: G01N 30/72, H01J 49/04, G01N 30/88

(54) **CHROMATOGRAPHY INTERFACE**

(30) Priority: 28.03.2023 GB 202304546
(71) Applicant: Thermo Fisher Scientific (Bremen) GmbH, 28199 Bremen (DE)
(72) Inventor: Wehkamp, Thomas, 27777 Ganderkesee (DE); Felsmann, Daniel, 28844 Weyhe (DE)

(57) **Abstract**

An interface for coupling a liquid chromatography device to a mass spectrometry device comprises a reactor for chemically converting analytes eluting from the liquid chromatography device and a housing for accommodating the reactor. The reactor is arranged on a tray (10) in the housing (40). The tray is slidable in a substantially horizontal plane relative to the housing so as to facilitate access to the reactor.

## Description

### Field of the invention

The invention relates to a chromatography interface. More in particular, the invention relates to an interface for coupling a liquid chromatography device to a mass spectrometry device, such as an isotope ratio mass spectrometry device. The invention further relates to a housing for an interface.

### Background of the invention

The field of liquid chromatography (LC) is well known. It is also well known to combine liquid chromatography with isotope ratio mass spectrometry (IRMS). The LC IsoLink^{™} IRMS System sold by Thermo Fisher Scientific couples high performance liquid chromatography (HPLC) with isotope ratio mass spectrometry (IRMS). In such a system, separated organic species can be oxidized to CO₂ and the resulting CO₂ is provided to the IRMS system. Such a process is disclosed in US 7 213 443 B2, where gas is generated from an eluate of a liquid chromatograph (LC). Subsequently, the gas is separated from the eluate. Finally, the gas is fed to an instrument, an isotope ratio mass spectrometer (IRMS), for isotopic ratio analysis. Another example of an LC-IRMS method is disclosed in DE 10 2004 010 969 B4.

Gas IRMS (GIRMS) peripherals are used to bring various types of samples into a form in which they can be measured by the gas isotope ratio mass spectrometer (GIRMS). Samples may comprise various organic materials, or mixtures thereof, or some inorganic substances. In order to be measured by the GIRMS, these samples can be converted into clean, simple gases such as CO₂, N₂, CO, H₂, or SO₂. Typically, this means chemically converting the analytes, e.g., by oxidation or pyrolysis.

As one example, the eluent of an HPLC system can be provided to the interface, where the eluent is mixed with a strongly oxidizing solution. Organic analytes are oxidized to CO₂ inside a heated capillary. The CO₂ produced is then transferred into a stream of helium in a membrane exchanger. Further on, the helium stream carrying the CO₂ has to pass several driers to remove most of the remaining water.

Several of the components of such an interface require regular maintenance or replacement. Some reactors may need to be replaced regularly. In existing interfaces, however, access to the reactor and other parts is sometimes difficult. Parts of the housing have to be removed and some components have to be disassembled. In some cases, this results in the mains voltage being exposed.

Another disadvantage of some existing systems is that leaks may occur, resulting in spillage of liquids. Some of the liquids used in interfaces can be highly corrosive and may constitute a safety hazard.

### Summary of the invention

To solve these and other problems, the invention provides an interface for coupling a liquid chromatography device to a mass spectrometry device, the interface comprising:
- a reactor for chemically converting analytes eluting from the liquid chromatography device, and
- a housing for accommodating the reactor,
wherein the reactor is arranged on a tray in the housing, which tray is slidable in a substantially horizontal plane relative to the housing so as to facilitate access to the reactor.

By providing a slidable tray on which the reactor can be arranged, access to the reactor can be facilitated. The tray may be slidable towards the operator for service purposes and be slid back into the housing after service is completed. Thus, sliding the tray towards the operator may cause the tray to extend at least partially from an opening in the housing. When the tray is slid into the housing, the opening may be closed off by a wall of the tray or by a door. Such a door may be operated manually or by the tray. In other embodiments, the opening in the housing may not be closed off.

It is noted that US 9 000 360 B2 discloses a sample preparation and analysis system which may include a mass spectrometer mounted on a slidable support. This also facilitates mounting the large instrument in the system. However, said patent fails to disclose or suggest mounting an LC-IRMS interface on a slidable support.

The tray may comprise a base surface provided with upstanding edges or walls configured to contain liquids. Such edges or walls can assist in containing any spilled liquid. For the same reason, the base surface or base plate may have no through holes. If the tray has through holes, they may be closed off by sealed bolts or plugs. In some embodiments, one or more drains may be provided to allow any spilled or leaked liquids to leave the tray via a controlled pathway. In such embodiments, one or more through-holes may be present to provide drains. In some embodiments, the tray may be provided with a support surface or support plate for mounting the reactor and any other components.

The tray may be made of steel, for example stainless steel, to resist any corrosion. Other metals may alternatively be used, such as aluminium. In some embodiments, corrosion-resistant plastics may be used.

The housing may have a front and the base surface of the tray may slope downwards towards the front such that any liquids collect near the front. That is, the base surface may be sloping, the front side facing the operator being slightly lower than the opposite side facing the housing. The base surface of the tray may have an angle of between 0.5° and 10°, preferably between 0.5° and 5°, for example 1° or 2°, relative to the horizontal. The tray may slide in a substantially horizontal plane, that is in a plane having a slope of less than approximately ±10°, preferably less than approximately ±5°, more preferably less than approximately ±2°, relative to the horizontal. Alternatively, the tray may slide in a horizontal plane while having a horizontal orientation, or the tray may slide in a horizontal plane while having a small slope relative to the horizontal, for example of less than approximately ±10°, thus being tilted relative to its path of travel.

The base surface of the tray may be provided with a chemically resistant coating. This may prevent the base surface to be damaged by corrosive substances.

The tray may further comprise a support plate arranged on the base surface, while the reactor may be mounted on the support plate. In turn, the support plate may be mounted on projections integral with or welded onto the tray. This allows the reactor to be mounted using through holes in the support plate while avoiding through holes in the tray itself. The support plate may also be provided with a chemically resistant coating.

The interface may further comprise a flexible cable guide or cable restraining member attached to both the housing and the tray, for guiding cables, wires and/or fluid conduits such as capillaries during the sliding of the tray. The flexible cable guide may comprise a plurality of hinged sections. The flexible cable guide may have an interior space through which at least one capillary can pass. Thus, a capillary can be protected by passing it through the flexible cable guide. The flexible cable guide may further have a minimum bending radius which is at least as large as the minimum bending radius of the at least one capillary. In this way, any buckling of the capillary or capillaries passing through the flexible cable guide is prevented.

The tray may further comprise at least one of:
- a valve for controlling a fluid flow into the reactor,
- a membrane exchanger for feeding reactor products into a carrier gas, and
- a gas dryer for drying the carrier gas from the membrane exchanger.

That is, in addition to the reactor other interface components may be arranged on the tray.

The interface may be configured for liquid chromatography-gas isotope ratio mass spectroscopy (LC-GIRMS) and/or liquid chromatography - flame ionization detection (LC-FID). The reactor may comprise a heating element, for example an electrical heating element.

The invention yet further provides a liquid chromatography- gas isotope ratio mass spectroscopy system comprising an interface as described above, as well as a liquid chromatography - flame ionization detection system comprising an interface as described above.

The invention still further provides a housing for an interface as described above. The invention yet further provides a tray for use in the housing and/or for use in the interface as described above.

### Brief description of the drawings

Fig. 1 schematically shows a top view of an exemplary embodiment of an interface tray according to the invention.
Figs. 2A & 2B schematically show cross-sectional side views of an exemplary embodiment of an interface tray housing according to the invention.
Fig. 3 schematically shows a front view of an exemplary embodiment of an interface cabinet according to the invention.
Fig. 4 schematically shows a three-dimensional view of an exemplary embodiment of a cable restraining member for use in an interface tray according to the invention.
Fig. 5 schematically shows a side view of an exemplary embodiment of a cable restraining member for use in an interface tray according to the invention.
Fig. 6 schematically shows a cross-sectional side view of a housing with an interface tray according to the invention having a first orientation.
Fig. 7 schematically shows a cross-sectional side view of a housing with an interface tray according to the invention having a second orientation.

### Detailed description of exemplary embodiments

The invention proposes to place some or all serviceable components of a chromatography - mass spectrometry interface on a slidable plate or tray, which may act as a drawer. This slidable plate may be accommodated in a housing and may be pulled out to the front of the housing (that is, towards the operator). All parts connected to mains voltage (power supply, cables) may be placed below the slidable plate, such that they cannot accidentally be touched by an operator or maintenance engineer.

The base of the tray may be made of stainless steel and may be leak-proof. That is, any through holes may be absent from the base of the tray. All sides or edges may be welded, which also serves to prevent any leaking of fluids. The slidable plate or tray may incline slightly to the front. That is, the slidable plate may slope downwards towards the front of the housing of the plate. Thereby, any liquid spilled inside the tray will be carried to its front, where an optional liquid outlet may allow for safe drainage, for example by a liquid conduit leading to a waste container.

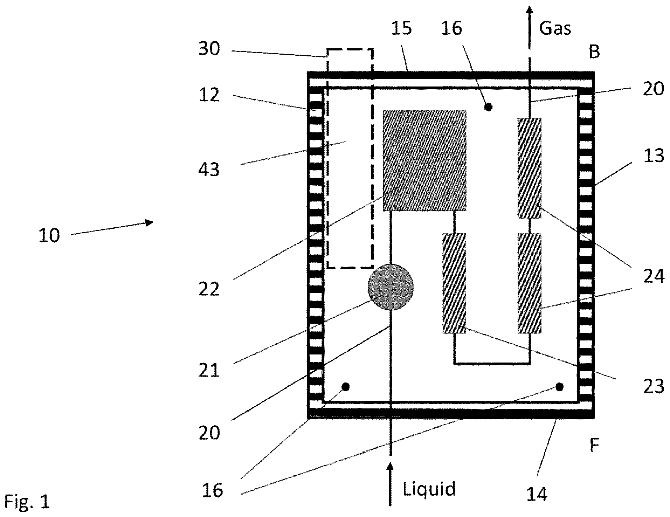

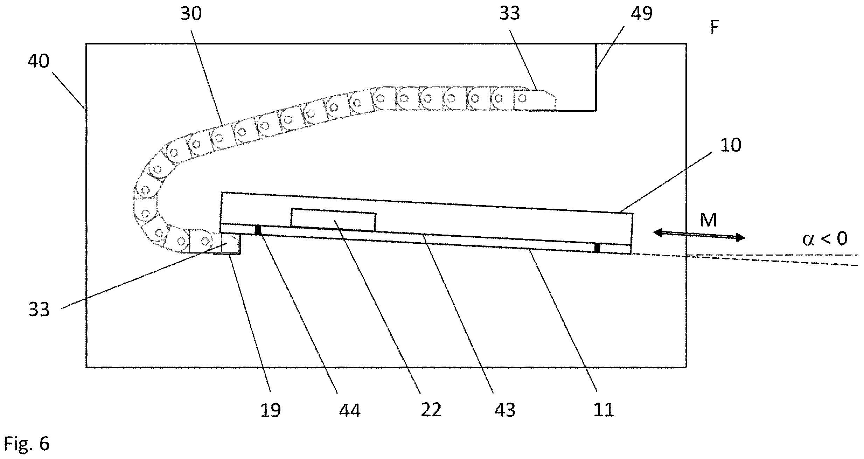

In the top view of Fig. 1, a slidable interface tray 10 is shown to comprise a support plate 43, side walls 12 & 13, a front wall 14 and a back wall 15 (the front F and back B of the tray 10 are marked in the drawing). The tray 10 of Fig 1 may further comprise a base plate (11 in Fig. 6) arranged underneath the support plate 43. Bolts 16 or other mounting elements can be welded onto the base plate and extend upwards through the support plate 43. In this way, making through holes in the base plate can be avoided and the base plate can be liquid tight. The base plate and the support plate 43 may be spaced apart by using spacing elements.

The side walls 12 & 13, front wall 14 and back wall 15 may be formed integrally with the base plate, by folding extensions of the base plate or by welding the walls onto the base plate. Alternatively, the walls may be mounted on the base plate using fasteners such as screws, preferably using sealing between the walls and the base plate. The base plate and/or the walls may be made of metal, such as sheet metal, or another material, such as plastic, preferably a corrosion-resistant plastic. A suitable material is stainless steel.

The components of a chromatography - mass spectrometry interface are mounted in the tray 10, in the embodiment shown on the support plate 43. In this particular embodiment, the interface comprises a valve 21, a reactor 22, a membrane exchanger 23 and gas dryers 24. A liquid sample can enter the reactor 22 via a conduit 20 that passes through or over the front wall 14 and through the valve 21. In the reactor 22, which may comprise a heating element, organic analytes present in the liquid sample can be oxidized to carbon dioxide (CO₂). This CO₂ is then transferred to the membrane exchanger 23, for example using helium as a carrier gas. The gas mixture containing the CO₂ is then fed through the gas driers 24 to remove any remaining water. The dried gas containing the CO₂ is then fed via the conduit 20 through or over the back wall 15 of the tray.

The (or the at least one) heating element of the reactor may comprise a heating foil, such as an electrically powered flatbed heating foil. The heating foil may be arranged on a support plate, the support plate preferably being a metal support plate. The heating foil may be glued on the support plate. Instead of, or in addition to a heating foil, another type of heating element may be used. For example, an electrically heated heating plate, a heating cartridge and/or a source of infrared (IR) radiation. The reactor further comprises a conduit or capillary through which fluid can pass.

The exemplary embodiment of Fig. 1 is an LC-IRMS interface. It will be understood that other chromatography - spectrometry interfaces may also be accommodated in a slidable tray.

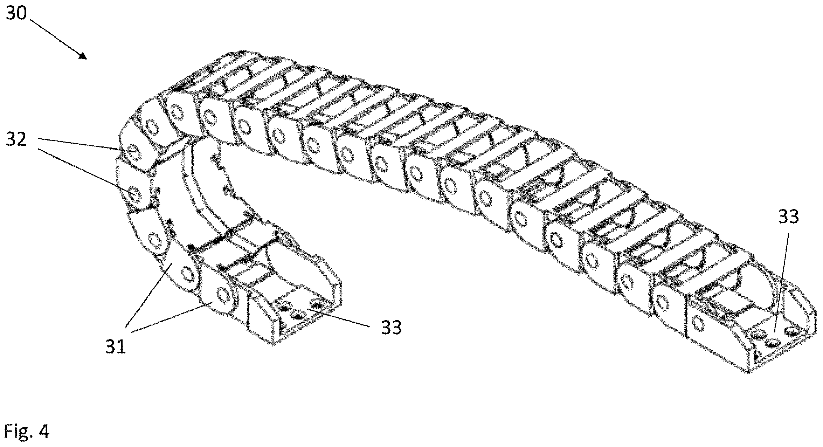

The tray 10 of Fig. 1 may further comprise a cable restraining member 30, indicated with broken lines in Fig. 1 so as not to obstruct the view of the support plate 43. This cable restraining member 30 serves to organize cables and/or tubing extending from the tray, and to prevent such cable and/or tubing from becoming entangled or trapped. One end of the cable restraining member 30 may be attached to the tray 10, while another end may be attached to a housing of the tray. This will later be explained in more detail with reference to Fig. 4.

In an embodiment, the slidable tray may have a width of approximately 20 cm, a length of approximately 30 cm and a height of approximately 2 cm. Different dimensions are of course possible, for example a height of approximately 4 cm or 5 cm, a larger or smaller width and a larger of smaller length. The tray may slide in the direction of its length or in the direction of its width. That is, the tray may slide forward and backward, but may alternatively be configured to slide sideways. The slope of the surface on which the components, such as the reactor, are mounted is independent from the direction in which the tray may slide. That is, the base surface and/or the support plate may slope downwards towards the front, to the back, to at least one side and/or to the middle of the base surface and/or support plate. The height of the tray may be defined by the upstanding sides, while any components mounted on the tray may or may not extend above the sides.

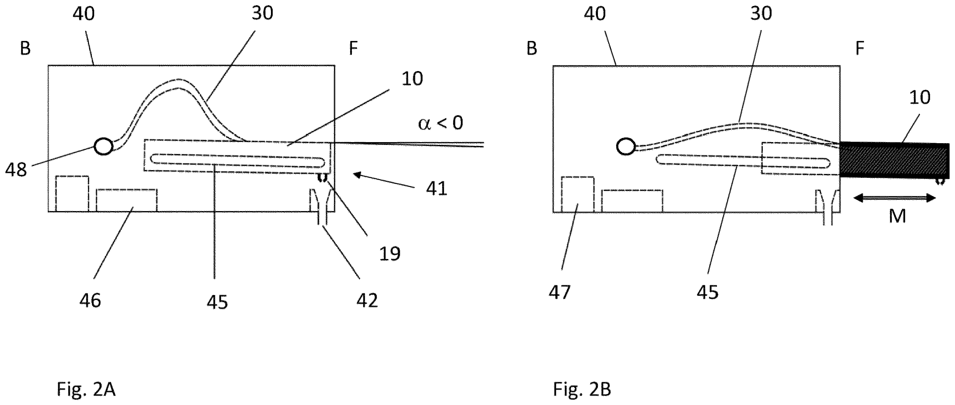

A slidable tray 10 arranged in a housing 40 is schematically shown in Figs. 2A & 2B. In Fig. 2A, the tray 10 is inside the housing 40, while in Fig. 2B, part of the tray 10 extends from the housing 40 to allow access to the interface mounted on the tray. In the example shown, the tray 10 is engaged by rails 45 arranged in the housing 40. The housing has an opening 41 at its front F through which the tray 10 can pass. The possible movement M of the tray is indicated in Fig. 2B.

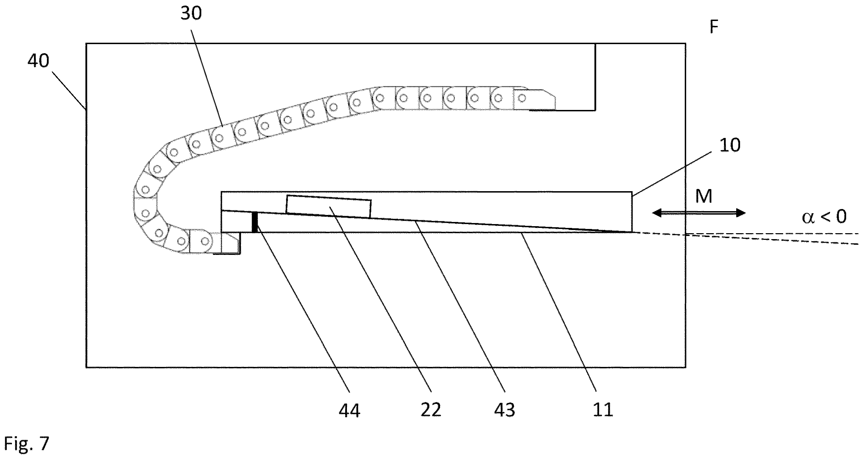

A cable restraining member 30 is shown to extend between the tray 10 and a mounting member 48 attached to the housing 40. In other embodiments, the cable restraining member 30 may be mounted differently, as will later be discussed with reference to Figs. 6 & 7.

In the embodiment shown, the tray 10 is inclined at an angle α relative to the top or bottom surfaces of the housing 40. That is, the plane of the tray 10 slopes slightly downward towards the front F of the housing 40 (in Fig. 2A, the reference to α being smaller than 0 is meant to indicate that the plane concerned slopes down rather than up). The angle α may be between 0.5° and 10°, preferably between 0.5° and 5°, for example approximately 1°, 2°, 3° or 4° This small inclination will cause any leaked or spilled liquid to collect towards the front of the tray 10, making the liquid easy to detect and remove. In the embodiment shown, a drain 19 is provided in the bottom of the tray 10, to allow any liquid in the tray to leave the tray via a controlled pathway. A corresponding drain 42 may be arranged in the bottom of the housing 40, underneath the tray drain 19 when the tray 10 is inside the housing. As shown in Fig. 2A, the lower drain 42 may be provided with a funnel to collect any fluid from the upper drain 19.

The bottom surface of the housing 40 may further be used to mount an electronics cabinet 46 and/or a counterweight 47. This counterweight 47 serves to balance the housing 40 when the tray 10 is in its extended position, as illustrated in Fig. 2B. The electronics cabinet 46 may be operated at a low voltage, for example 12 V or 24 V, to increase the safety of the operator of the interface.

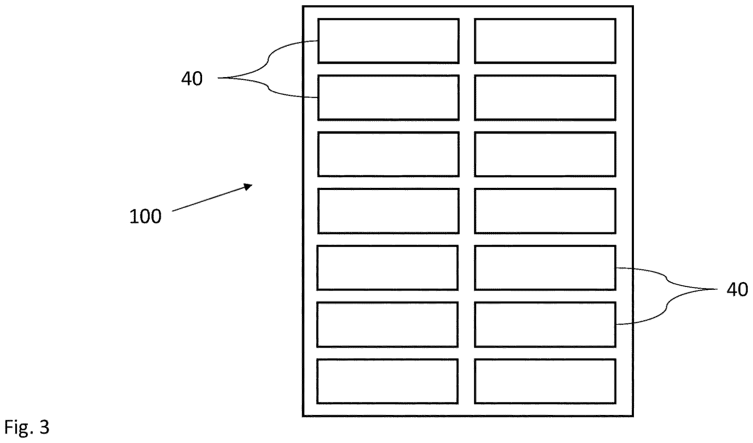

An exemplary embodiment of an interface cabinet 100 is schematically shown in Fig. 3. The interface cabinet 100 may comprise a rack in which a plurality of housings 40 is accommodated. Each housing 40 may in turn accommodate a tray (10 in Figs. 1, 2A & 2B). In some embodiments, a single housing 40 may accommodate two or three trays.

An exemplary embodiment of a cable restraining member 30 for use in an interface tray is illustrated in Fig. 4. The cable restraining member 30 shown comprises a plurality of elements 31 which are connected to each other via hinges 32. This hinged arrangement allows the cable restraining member 30 to flex. Mounting elements 33 are provided at the ends of the cable restraining member 30. One mounting element 33 may be attached to the tray, while the other to its housing, for example via a mounting member (48 in Figs. 2A & 2B) attached to the interior of the housing. As can be seen in Fig. 4, the elements 31 of the cable restraining member 30 define an interior space through which cables, wires and/or fluid conduits may be passed.

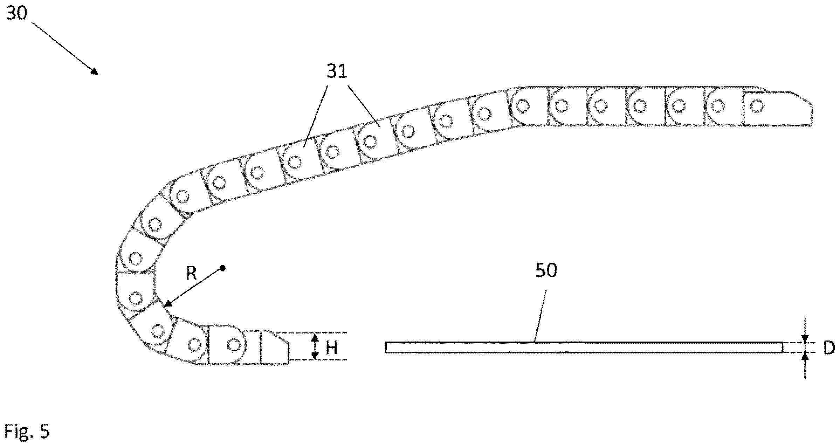

The cable restraining member 30 is also shown in Fig. 5. Embodiments of the cable restraining member 30 have an interior height H sufficient for allowing a capillary 50 to pass through the interior of the cable restraining member. That is, the capillary 50 has a diameter D which is less than the interior height H of the cable restraining member 30. In some embodiments, the capillary may have a diameter D equal to approximately 1 mm while the interior height H may be approximately 2 mm. The cable restraining member 30 can have a minimum bending radius R which is as least as large as the minimum bending radius of the capillary, to prevent any buckling of the capillary. The particular bending radius of the capillary will depend on its diameter and on the material (for example steel or silica) from which it is made.

A cable restraining member 30 mounted in a housing is schematically shown in Fig. 6. One mounting element 33 of the cable restraining member 30 is shown to be mounted on a support element 49 attached to the (top surface of the) interior of the housing 40, while the other mounting element 33 is shown to be mounted on a support element 19 attached to the (bottom of the) tray 10. As the cable restraining member 30 is flexible, its end mounted on the support 19 will move with the tray 10 when the tray is pulled out from the housing 40 or is pushed back into the housing (movement M). It can be seen that in this embodiment, the movement M is at an angle α relative to the horizontal.

In the embodiment of Fig. 6, the tray 10 is provided with a support plate 43 on which a reactor 22 and any other components (not shown) is mounted. This support plate 43 is in turn mounted on the base surface or base plate 11 of the tray 10 using bolts and/or spacers 44. These bolts and/or spacers 44 may be welded onto, or be made integrally with, the base surface of the tray, to avoid any through holes in the base surface 11 and thus to make the tray liquid tight. In the support plate 43, through holes can be present, which facilitates the mounting of the reactor 22 and any other interface components.

In the embodiment of Fig. 6, the tray 10 is arranged at an angle α relative to the horizontal plane of the housing 40 (in the drawing, this angle α is exaggerated for clarity) and the direction of the movement M is also inclined (it is noted that embodiments can be envisaged in which an inclined tray moves in the horizontal plane of the housing). The support plate 43 is mounted parallel to the base surface 11 of the inclined tray and is therefore also inclined, causing any liquids to collect at the front end of the tray.

In the embodiment of Fig. 7, the tray 10 is arranged in the horizontal plane of the housing 40 while the support plate 43 is arranged at an angle α relative to the plane of the tray. The movement M of the tray is, in this embodiment, in the horizontal plane, yet the support plate 43 is inclined, thus achieving the same advantages as in the embodiment of Fig. 6.

An interface mounted in a slidable tray as described above not only provides easy access to its parts but also reduces the risk of any liquids leaking from the interface or being spilled when using the interface.

It will be understood by those skilled in the art that the invention is not limited to the embodiments shown and that various additions and modifications may be made without departing from the scope of the invention as defined in the appending claims.

## Claims

1. An interface for coupling a liquid chromatography device to a mass spectrometry device, the interface comprising:
- a reactor (22) for chemically converting analytes eluting from the liquid chromatography device, and
- a housing (40) for accommodating the reactor,
wherein the reactor is arranged on a tray (10) in the housing, which tray is slidable in a substantially horizontal plane relative to the housing so as to facilitate access to the reactor.

2. The interface according to claim 1, wherein the tray (10) comprises a base surface (11) provided with upstanding edges (12, 13) configured to contain liquids.

3. The interface according to claim 1 or 2, wherein the housing (40) has a front (F) and wherein the base surface of the tray (10) slopes down towards the front, such that any liquids collect near the front.

4. The interface according to claim 3, wherein the base surface (11) of the tray (10) has a slope of between 1° and 20°, preferably between 5° and 15°.

5. The interface according to any of the preceding claims, wherein the base surface (11) of the tray (10) is provided with a chemically resistant coating.

6. The interface according to any of the preceding claims, wherein the tray (10) further comprises a support plate (43) arranged on the base surface (11), and wherein the reactor (22) is mounted on the support plate (43), the support plate preferably being provided with a chemically resistant coating.

7. The interface according to any of the preceding claims, further comprising a flexible cable guide (30) attached to both the housing (40) and the tray (10) for guiding cables and/or flexible conduits during sliding.

8. The interface according to claim 7, wherein the flexible cable guide (30) comprises a plurality of hinged sections (31).

9. The interface according to claim 7 or 8, wherein the flexible cable guide (30) has an interior space through which at least one capillary (50) can pass, the flexible cable guide preferably having a minimum bending radius (R) which is at least as large as the minimum bending radius of the at least one capillary.

10. The interface according to any of the preceding claims, wherein the tray (10) further comprises at least one of:
- a valve (21) for controlling a fluid flow into the reactor (22),
- a membrane exchanger (23) for feeding reactor products into a carrier gas, and
- a gas dryer (24) for drying the carrier gas from the membrane exchanger.

11. The interface according to any of the preceding claims, which is configured for liquid chromatography-gas isotope ratio mass spectroscopy.

12. The interface according to any of the preceding claims, wherein the reactor (22) comprises a heating element.

13. A liquid chromatography - gas isotope ratio mass spectroscopy system comprising an interface according to any of the preceding claims.

14. A housing (40) for an interface according to any of claims 1 to 12.

15. A tray (10) for use in the interface according to any of claims 1 to 12.
